(19) **Europäisches Patentamt**
**European Patent Office**
**Office européen des brevets**

(11) **EP 1 500 425 B1**

(12) **EUROPEAN PATENT SPECIFICATION**

(45) Date of publication and mention
of the grant of the patent:
**16.06.2010 Bulletin 2010/24**

(51) Int Cl.:
*B01D 71/56* (2006.01)          *B01D 69/12* (2006.01)

(21) Application number: **04010224.6**

(22) Date of filing: **29.04.2004**

(54) **Composite semipermeable membrane and process for producing the same**

Semipermeable Verbundmembran und Verfahren zu ihrer Herstellung

Membrane semiperméable et procedée de production

(84) Designated Contracting States:
**ES FR GB IT**

(30) Priority: **06.05.2003   JP 2003127817**

(43) Date of publication of application:
**26.01.2005   Bulletin 2005/04**

(73) Proprietor: **NITTO DENKO CORPORATION**
**Ibaraki-shi, Osaka 567-0041 (JP)**

(72) Inventors:
• **Hirose, Masahiko**
**Ibaraki-shi**
**Osaka (JP)**

• **Takata, Masakatsu**
**Ibaraki-shi**
**Osaka (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 1 020 218      EP-A- 1 060 785**
**US-A- 5 510 527      US-A- 5 674 398**

**Description**

The present invention relates to a process for producing a composite semipermeable membrane comprising a thin film comprising a polyamide resin and a porous supporting film which supports the thin film. This composite semipermeable membrane is suitable for use in the production of ultrapure water, desalting of brackish water or seawater, etc. It can be used also for removing/recovering contaminants or effective substances from, e.g., pollution sources such as dyeing wastewater and electrodeposition paint wastewater. The composite semipermeable membrane can thus contribute to the cyclic use of wastewater. Furthermore, the composite semipermeable membrane can be used for advanced treatments such as the concentration of effective ingredients in food or other applications and the removal of harmful ingredients in the field of water purification, sewage treatment, or the like.

A composite semipermeable membrane comprising a porous support and formed thereon a thin film having substantially selective separating properties has been known hitherto. Such conventional composite semipermeable membranes are ones comprising a support and formed thereon a skin layer comprising a polyamide obtained by the interfacial polymerization of a polyfunctional aromatic amine with a polyfunctional aromatic acid halide (see JP-A-55-147106, JP-A-62-121603, JP-A-63-218208 and JP-A-2001-79372). Although these composite semipermeable membranes have high desalting performance and water permeability and the high ability to reject ionic substances, the amount of water passing through these membranes is small. There has been a desire for an even higher permeation flux. A technique for attaining a higher permeation flux has been disclosed which comprises adding an amine salt to a thin film (see JP-B-6-73617).

However, the technique disclosed in JP-B-6-73617 has had problems, for example, that drying of the film after interfacial polymerization for improving handleability results in a decrease in the ability to reject organic substances and a decrease in performance against chemical detergents or the like.

EP-A-1020218 discloses a composite reverse osmosis membrane which comprises a polyamide skin layer on a porous support. The skin layer is formed by a process which comprises the steps of coating an aqueous solution including a polyfunctional amine on a surface of the porous support, and subsequently coating thereon a non-aqueous solution including a polyfunctional acid halide.

EP-A-1060785 discloses a selective, water-permeable membrane for reverse osmosis and nanofiltration, said membrane being prepared by interfacially polymerizing, on a microporous support, a specific bipiperidine reactant and a polyfunctional acyl halide reactant.

Composite reverse osmosis membranes comprising a microporous substrate having thereon a thin film, said film containing a polyamide obtained by interfacial polymerization of a polyfunctional amine and a polyfunctional acid halide, are also known from US-A-5674398 and US-A-5510527.

The object of the present invention is to provide a process for producing a composite semipermeable membrane which combines the high ability to reject salts and a high permeation flux and is especially excellent in the ability to reject uncharged substances.

The present invention provides a process for producing a composite semipermeable membrane which comprises forming, on a surface of a porous supporting film, a thin film comprising a polyamide resin obtained by reacting a polyfunctional amine ingredient with a polyfunctional acid ingredient selected from polyfunctional acid halides and polyfunctional acid anhydrides each having two or more reactive carbonyl groups in the presence of at least an alkali metal hydroxide and an organic acid, wherein the thin film is formed by bringing an aqueous solution prepared by mixing at least the polyfunctional amine ingredient, the alkali metal hydroxide, the organic acid, and water into contact with an organic solution containing the polyfunctional acid ingredient to cause interfacial polymerization, wherein the ratio of the normality of the alkali metal hydroxide to that of the organic acid to be mixed therewith (alkali metal hydroxide/organic acid) is from 1.2/1 to 0.9/1, and wherein the aqueous solution has a pH of from 5 to 11.

Preferred embodiments of the invention are set forth in the sub-claims.

The composite semipermeable membrane produced by the process combines the high ability to reject salts and a high permeation flux and has the high ability to reject, in particular, uncharged substances. Such remarkable effects are produced by forming a thin film by reacting a polyfunctional amine ingredient with a specific polyfunctional acid ingredient in the presence of at least an alkali metal hydroxide and an organic acid. Although the reasons for this are unclear, it is thought that the alkali metal hydroxide and the organic acid produced a synergistic effect in the step of thin-film formation to modify the structure and properties of the thin film.

In the process for producing a composite semipermeable membrane according to the present invention, the thin film is formed by bringing an aqueous solution prepared by mixing at least the polyfunctional amine ingredient, the alkali metal hydroxide, the organic acid and water, into contact with an organic solution containing the polyfunctional acid ingredient to cause interfacial polymerization. It is preferred that after the interfacial polymerization, the resulting film be heated to 100°C or higher to thereby produce the thin film. By the heating to 100°C or higher, the mechanical strength, heat resistance and other properties of the thin film can be improved. The heating temperature is preferably 100-200°C, more preferably 100-150°C.

The organic acid preferably contains a sulfo group and/or a carboxyl group.

The organic acid preferably is an organic acid which does not have a long-chain alkyl group having 6 or more carbon atoms.

The ratio of the normality of the alkali metal hydroxide to be mixed with water to that of the organic acid to be mixed with the water (alkali metal hydroxide/organic acid) is from 1.2/1 to 0.9/1. The aqueous solution has a pH of 5-11. Where the normality ratio exceeds 1.2/1, the aqueous solution has an increased pH and this tends to result in a reduced permeation flux. On the other hand, where the normality ratio is lower than 0.9/1, the aqueous solution has a reduced pH to show reduced reactivity in interfacial polymerization and, hence, high salt-rejecting ability tends to be not obtained.

The obtained semipermeable membrane comprises a porous supporting film and formed on a surface thereof a thin film comprising a polyamide resin obtained by the condensation reaction of the polyfunctional amine ingredient with the polyfunctional acid ingredient, wherein the thin film contains an organic acid/alkali metal salt formed from an alkali metal hydroxide and an organic acid having no long-chain alkyl group having 6 or more carbon atoms. In the present invention, the organic acid preferably contains a sulfo group and/or a carboxyl group.

The present invention will be described in detail below.

The process for producing a composite semipermeable membrane according to the present invention comprises forming on a surface of a porous supporting film a thin film comprising a polyamide resin obtained by reacting a polyfunctional amine ingredient with a specific polyfunctional acid ingredient in the presence of at least an alkali metal hydroxide and an organic acid.

The polyfunctional amine ingredient is one or more polyfunctional amines having two or more reactive amino groups, and examples thereof include aromatic, aliphatic and alicyclic polyfunctional amines.

Examples of the aromatic polyfunctional amines include m-phenylenediamine, p-phenylenediamine, o-phenylenediamine, 1,3,5-triaminobenzene, 1,2,4-triaminobenzene, 3,5-diaminobenzoic acid, 2,4-diaminotoluene, 2,6-diaminotoluene, N,N'-dimethyl-m-phenylenediamine, 2,4-diaminoanisole, amidol, and xylylenediamine. Examples of the aliphatic polyfunctional amines include ethylenediamine, propylenediamine, tris(2-aminoethyl)amine, and N-phenylethylenediamine. Examples of the alicyclic polyfunctional amines include 1,3-diaminocyclohexane, 1,2-diaminocyclohexane, 1,4-diaminocyclohexane, piperazine, 2,5-dimethylpiperazine, and 4-aminomethylpiperazine. These polyfunctional amines may be used alone or in combination of two or more thereof.

The polyfunctional acid ingredient is selected from polyfunctional acid halides and polyfunctional acid anhydrides each having two or more reactive carbonyl groups.

Examples of the polyfunctional acid halide compounds include aromatic, aliphatic, and alicyclic polyfunctional acid halide compounds. Examples of the aromatic polyfunctional acid halides include trimesoyl trichloride, terephthaloyl dichloride, isophthaloyl dichloride, biphenyldicarbonyl dichloride, naphthalenedicarbonyl dichloride, benzenetrisulfonyl trichloride, benzenedisulfonyl dichloride, and chlorosulfonylbenzenedicarbonyl dichloride. Examples of the aliphatic polyfunctional acid halides include propanedicarbonyl dichloride, butanedicarbonyl dichloride, pentanedicarbonyl dichloride, propanetricarbonyl trichloride, butanetricarbonyl trichloride, pentanetricarbonyl trichloride, glutaryl halides, and adipoyl halides. Examples of the alicyclic polyfunctional acid halides include cyclopropanetricarbonyl trichloride, cyclobutanetetracarbonyl tetrachloride, cyclopentanetricarbonyl trichloride, cyclopentanetetracarbonyl tetrachloride, cyclohexanetricarbonyl trichloride, tetrahydrofurantetracarbonyl tetrachloride, cyclopentanedicarbonyl dichloride, cyclobutanedicarbonyl dichloride, cyclohexanedicarbonyl dichloride, and tetrahydrofurandicarbonyl dichloride. These polyfunctional acid halides may be used alone or in combination of two or more thereof. From the standpoint of obtaining a thin film having high salt-rejecting ability, it is preferred to use one or more aromatic polyfunctional acid halides.

It is also preferred to use an acid ingredient having a functionality of 3 or higher as at least part of the polyfunctional acid ingredient to form a crosslinked structure.

A polymer such as poly(vinyl alcohol), polyvinylpyrrolidone or poly(acrylic acid), a polyhydric alcohol such as sorbitol or glycerol, or the like may be copolymerized in order to improve the performance of the thin film comprising a polyamide resin.

Examples of the alkali metal hydroxide include the hydroxides of lithium, sodium, potassium, rubidium, and cesium. Of those, lithium hydroxide, sodium hydroxide and potassium hydroxide are preferably used. These alkali metal hydroxides may be used alone or in combination of two or more thereof.

The organic acid is not particularly limited as long as it is a compound which forms a salt with the alkali metal hydroxide. Examples of the organic acid include aromatic organic acids such as benzenesulfonic acid or benzoic acid; aliphatic organic acids such as acetic acid, trifluoroacetic acid, propanoic acid, butanoic acid, pentanoic acid, lauric acid or stearic acid; and alicyclic organic acids such as camphorsulfonic acid. The organic acid preferably is an organic acid which contains a sulfo group and/or a carboxyl group. The organic acid preferably is one which does not have a long-chain alkyl group having 6 or more carbon atoms. Namely, the organic acid/alkali metal salt to be formed from the organic acid and the alkali metal hydroxide preferably is one which does not have the properties of surfactants.

The porous supporting film which supports the thin film in the present invention is not particularly limited as long as it is capable of supporting the thin film. It is usually preferred to use an ultrafiltration membrane having micropores with an average pore diameter of 10-500 Å. Examples of the material for the porous supporting film include various polymers including polysulfones, poly(aryl ether sulfone)s such as polyethersulfones, polyimides, and poly(vinylidene fluoride). Of those, polysulfones and poly(aryl ether sulfone)s are preferably used because these polymers are chemically, mechanically and thermally stable. Although the thickness of this porous supporting film is not particularly limited, it is generally 25-125 $\mu$m, preferably 40-75 $\mu$m. The porous supporting film may be reinforced by backing with a woven fabric, nonwoven fabric, or the like.

Preferred methods in the present invention are: a method which comprises bringing an aqueous solution prepared by mixing at least the polyfunctional amine ingredient, an alkali metal hydroxide, an organic acid, and water into contact with an organic solution containing the polyfunctional acid ingredient to cause interfacial polymerization and thereby form a thin film and placing the thin film on a porous supporting film; and a method in which the interfacial polymerization is conducted on a porous supporting film to thereby form a thin film of a polyamide resin directly on the porous supporting film.

Especially preferred method is an interfacial polymerization method in which an aqueous solution prepared by mixing at least the polyfunctional amine ingredient, an alkali metal hydroxide, an organic acid, and water is applied to a porous supporting film and this porous supporting film is then brought into contact with an organic solution containing the polyfunctional acid ingredient to thereby form a thin film on the porous supporting film.

In the interfacial polymerization method, the concentration of the polyfunctional amine ingredient in the aqueous solution is not particularly limited. However, the concentration of the polyfunctional amine ingredient is preferably 0.1-10% by weight, more preferably 0.5-5% by weight. Where the concentration of the polyfunctional amine ingredient is lower than 0.1% by weight, the resultant thin film is apt to have defects such as pinholes and tends to have reduced salt-rejecting ability. On the other hand, where the concentration of the polyfunctional amine ingredient exceeds 10% by weight, the resultant film tends to have too large a thickness and, hence, have high permeation resistance and a reduced permeation flux.

The amounts of the alkali metal hydroxide and organic acid to be mixed with water are not particularly limited. However, the amount of the alkali metal hydroxide is preferably such that the concentration thereof is 0.1-1 N, while that of the organic acid is preferably such that the concentration thereof is 0.1-1 N. When the amounts of the alkali metal hydroxide and organic acid to be mixed with water are too small, there are cases where the effect of the invention, i.e., to provide a composite semipermeable membrane which combines high salt-rejecting ability and a high permeation flux and is especially excellent in the ability to reject uncharged substances, is not sufficiently obtained. On the other hand, in case where the amounts of the alkali metal hydroxide and organic acid to be mixed with water are too large, a reduced salt rejection tends to result.

Examples of methods for preparing the aqueous solution include: a method which comprises adding an alkali metal hydroxide and an organic acid to water and adding a polyfunctional amine ingredient thereto to dissolve it; a method in which an aqueous solution containing an alkali metal hydroxide and an organic acid is mixed with an aqueous solution containing a polyfunctional amine ingredient; and a method which comprises adding an alkali metal hydroxide and an organic acid to an aqueous solution containing a polyfunctional amine ingredient. However, methods used for preparing the aqueous solution are not limited to these.

The thin film is formed under such conditions that the ratio of the normality of the alkali metal hydroxide to be mixed with water to that of the organic acid to be mixed with the water (alkali metal hydroxide/organic acid) is from 1.2/1 to 0.9/1. Where the normality ratio exceeds 1.2/1, the aqueous solution has an increased pH and this tends to result in a reduced permeation flux. On the other hand, where the normality ratio is lower than 0.9/1, the aqueous solution has a reduced pH to show reduced reactivity in interfacial polymerization and, hence, high salt-rejecting ability tends to be not obtained.

The concentration of the polyfunctional acid ingredient in the organic solution is not particularly limited. However, the concentration thereof is preferably 0.01-10% by weight, more preferably 0.05-2% by weight. Where the concentration of the polyfunctional acid ingredient is lower than 0.1% by weight, the resulting thin film is apt to have defects such as pinholes and tends to have reduced salt-rejecting ability. On the other hand, where the concentration of the polyfunctional acid ingredient exceeds 10% by weight, the resulting film tends to have too large a thickness and, hence, have high permeation resistance and a reduced permeation flux.

The organic solvent to be used in the organic solution is not particularly limited as long as it has low solubility in water, does not deteriorate the porous supporting film, and is capable of dissolving the polyfunctional acid ingredient therein. Examples of the organic solvent include saturated hydrocarbons such as cyclohexane, heptane, octane, and nonane and halogen-substituted hydrocarbons such as 1,1,2-trichlorotrifluoroethane. Preferred organic solvents are saturated hydrocarbons having a boiling point of 300°C or lower, more preferably 200°C or lower.

Various additives can be added to the aqueous solution or organic solution for the purpose of facilitating film formation or improving the performance of the composite semipermeable membrane to be obtained. Examples of the additives include surfactants such as sodium dodecylbenzenesulfonate, sodium dodecyl sulfate, and sodium lauryl sulfate, basic compounds for removing the hydrogen halide which may be generated by the polymerization, such as sodium hydroxide, trisodium phosphate, and triethylamine, acylation catalysts, and the compounds having a solubility parameter of 8-14 $(cal/cm^3)^{1/2}$ which are shown in JP-A-8-224452.

After the aqueous solution is applied to a porous supporting film, this porous supporting film is brought into contact with an organic solution containing the polyfunctional acid ingredient. Although the period of this contact is not particularly limited, it is preferably 2-600 seconds, more preferably 4-120 seconds.

It is preferred in the present invention that after the contact with the organic solution, the excess organic solvent remaining on the porous supporting film be removed and the film formed on the porous supporting film be heated and dried at 100°C or higher to form a thin film. By thus heat-treating the film formed, the mechanical strength, heat resistance, and other properties of the film can be enhanced. The heating temperature is more preferably 100-200°C, most preferably 100-150°C. The period of the heating is preferably 30 seconds to 10 minutes, more preferably 1-7 minutes.

The thickness of the thin film thus formed is generally 0.05-2 $\mu$m, preferably 0.1-1 $\mu$m.

The obtained composite semipermeable membrane combines high salt-rejecting ability and a high permeation flux and is especially excellent in the ability to reject uncharged substances. This composite semipermeable membrane can be advantageously used in the fields where clean water is required, such as the conversion of brackish water, seawater, or the like into fresh water by desalting and the production of ultrapure water necessary for semiconductor production.

The present invention will be described in more detail by reference to the following Examples. The values of sodium chloride rejection (%) and IPA rejection (%) shown in the Examples, etc., were calculated using the following equation.

## Sodium Chloride Rejection

$$\text{Rejection (\%)} = \{1-[(\text{sodium chloride concentration in permeate water})/(\text{sodium chloride concentration in raw water})]\} \times 100$$

## IPA Rejection

$$\text{Rejection (\%)} = \{1-[(\text{IPA concentration in permeate water})/(\text{IPA concentration in raw water})]\} \times 100$$

## EXAMPLE 1

Three parts by weight of m-phenylenediamine, 0.25 parts by weight of sodium lauryl sulfate, 5.5 parts by weight of benzenesulfonic acid (0.35 N), 1.4 parts by weight of sodium hydroxide (0.35 N), 20 parts by weight of isopropyl alcohol, and 69.85 parts by weight of water were mixed together to prepare an aqueous solution (pH: 7.2). This aqueous solution was applied to a porous supporting film (ultrafiltration membrane). The excess aqueous solution was removed to form a film on the porous supporting film. An isooctane solution containing 0.2% by weight trimesoyl chloride was applied to the film. The excess isooctane solution was removed, and this supporting film was held in a 120°C drying oven for 2 minutes to form a thin film on the porous supporting film. Thus, a composite semipermeable membrane was obtained.

The composite semipermeable membrane produced was used to conduct a permeation test in which 500 mg/l aqueous sodium chloride solution was treated as a raw water under the conditions of a temperature of 25°C, pH of 6.5, and pressure of 0.75 MPa. As a result, the sodium chloride rejection was 99.1% and the permeation flux was 1.4 $m^3/(m^2/day)$. Furthermore, 500 ppm aqueous isopropyl alcohol (IPA) solution was treated as a raw water in a permeation test under the conditions of a temperature of 25°C, pH of 6.5, and pressure of 0.75 MPa. As a result, the IPA rejection was 83% and the permeation flux was 1.4 $m^3/(m^2/day)$.

## EXAMPLE 2

Three parts by weight of m-phenylenediamine, 0.25 parts by weight of sodium lauryl sulfate, 2.1 parts by weight of acetic acid (0.35 N), 1.4 parts by weight of sodium hydroxide (0.35 N), 20 parts by weight of isopropyl alcohol, and 73.25 parts by weight of water were mixed together to prepare an aqueous solution (Ph: 6.6). Except this, a composite semipermeable membrane was obtained in the same manner as in Example 1. The composite semipermeable membrane produced was used to conduct permeation tests by the same method as in Example 1. As a result, the sodium chloride rejection was 99.2% and the permeation flux was 1.3 $m^3/(m^2/day)$. Furthermore, the IPA rejection was 84% and the permeation flux was 1.3 $m^3/(m^2/day)$.

## EXAMPLE 3

Three parts by weight of m-phenylenediamine, 0.25 parts by weight of sodium lauryl sulfate, 3.3 parts by weight of methanesulfonic acid (0.35 N), 1.4 parts by weight of sodium hydroxide (0.35 N), 20 parts by weight of isopropyl alcohol, and 72.05 parts by weight of water were mixed together to prepare an aqueous solution (pH: 6.1). Except this, a composite semipermeable membrane was obtained in the same manner as in Example 1. The composite semipermeable membrane produced was used to conduct permeation tests by the same method as in Example 1. As a result, the sodium chloride rejection was 99.2% and the permeation flux was 1.5 $m^3/(m^2/day)$. Furthermore, the IPA rejection was 80% and the permeation flux was 1.5 $m^3/(m^2/day)$.

## EXAMPLE 4

Three parts by weight of m-phenylenediamine, 0.25 parts by weight of sodium lauryl sulfate, 8.0 parts by weight of camphorsulfonic acid (0.35 N), 1.4 parts by weight of sodium hydroxide (0.35 N), 20 parts by weight of isopropyl alcohol, and 67.35 parts by weight of water were mixed together to prepare an aqueous solution (pH: 6.2). Except this, a composite semipermeable membrane was obtained in the same manner as in Example 1. The composite semipermeable membrane produced was used to conduct permeation tests by the same method as in Example 1. As a result, the sodium chloride rejection was 99.1% and the permeation flux was 1.3 $m^3/(m^2/day)$. Furthermore, the IPA rejection was 83% and the permeation flux was 1.3 $m^3/(m^2/day)$.

## EXAMPLE 5

Three parts by weight of m-phenylenediamine, 0.25 parts by weight of sodium lauryl sulfate, 5.5 parts by weight of benzenesulfonic acid (0.35 N), 2.0 parts by weight of sodium hydroxide (0.35 N), 20 parts by weight of isopropyl alcohol, and 69.25 parts by weight of water were mixed together to prepare an aqueous solution (pH: 6.3). Except this, a composite semipermeable membrane was obtained in the same manner as in Example 1. The composite semipermeable membrane produced was used to conduct permeation tests by the same method as in Example 1. As a result, the sodium chloride rejection was 99.1% and the permeation flux was 1.1 $m^3/(m^2/day)$. Furthermore, the IPA rejection was 79% and the permeation flux was 1.1 $m^3/(m^2/day)$.

## EXAMPLE 6

Three parts by weight of m-phenylenediamine, 0.25 parts by weight of sodium lauryl sulfate, 5.5 parts by weight of benzenesulfonic acid (0.35 N), 0.8 parts by weight of lithium hydroxide (0.35 N), 20 parts by weight of isopropyl alcohol, and 70.45 parts by weight of water were mixed together to prepare an aqueous solution (pH: 9.7). Except this, a composite semipermeable membrane was obtained in the same manner as in Example 1. The composite semipermeable membrane produced was used to conduct permeation tests by the same method as in Example 1. As a result, the sodium chloride rejection was 99.2% and the permeation flux was 1.0 $m^3/(m^2/day)$. Furthermore, the IPA rejection was 85% and the permeation flux was 1.0 $m^3/(m^2/day)$.

## REFERENCE EXAMPLE 1

Three parts by weight of m-phenylenediamine, 0.25 parts by weight of sodium lauryl sulfate, 5.5 parts by weight of benzenesulfonic acid (0.35 N), 1.4 parts by weight of sodium hydroxide (0.35 N), 3.5 parts by weight of triethylamine, 20 parts by weight of isopropyl alcohol, and 66.35 parts by weight of water were mixed together to prepare an aqueous solution (pH: 12.0). Except this, a composite semipermeable membrane was obtained in the same manner as in Example 1. The composite semipermeable membrane produced was used to conduct permeation tests by the same method as in Example 1. As a result, the sodium chloride rejection was 99.2% and the permeation flux was 0.7 $m^3/(m^2/day)$. Furthermore, the IPA rejection was 80% and the permeation flux was 0.7 $m^3/(m^2/day)$. This composite semipermeable membrane showed a lower permeation flux than that obtained in Example 1.

## COMPARATIVE EXAMPLE 1

Three parts by weight of m-phenylenediamine, 0.25 parts by weight of sodium lauryl sulfate, 5.5 parts by weight of benzenesulfonic acid (0.35 N), 20 parts by weight of isopropyl alcohol, and 71.25 parts by weight of water were mixed together to prepare an aqueous solution (pH: 3.0). Except this, a composite semipermeable membrane was obtained in the same manner as in Example 1. The composite semipermeable membrane produced was used to conduct permeation tests by the same method as in Example 1. As a result, the sodium chloride rejection was 27% and the permeation flux was 3.8 $m^3/(m^2/day)$. Furthermore, the IPA rejection was 10% and the permeation flux was 3.9 $m^3/(m^2/day)$. This composite semipermeable membrane was considerably inferior in sodium chloride rejection and IPA rejection to that obtained in Example 1.

## COMPARATIVE EXAMPLE 2

Three parts by weight of m-phenylenediamine, 0.25 parts by weight of sodium lauryl sulfate, 5.5 parts by weight of benzenesulfonic acid (0.35 N), 3.5 parts by weight of triethylamine (0.35 N), 20 parts by weight of isopropyl alcohol, and 67.75 parts by weight of water were mixed together to prepare an aqueous solution. Except this, a composite semipermeable membrane was obtained in the same manner as in Example 1. The composite semipermeable membrane produced was used to conduct permeation tests by the same method as in Example 1. As a result, the sodium chloride rejection was 99.1% and the permeation flux was 1.4 $m^3/(m^2/day)$. Furthermore, the IPA rejection was 77% and the permeation flux was 1.4 $m^3/(m^2/day)$. This composite semipermeable membrane was equal in sodium chloride rejection but inferior in IPA rejection to the composite semipermeable membrane obtained in Example 1.

## COMPARATIVE EXAMPLE 3

Three parts by weight of m-phenylenediamine, 0.25 parts by weight of sodium lauryl sulfate, 1.3 parts by weight of hydrochloric acid (0.35 N), 1.4 parts by weight of sodium hydroxide (0.35 N), 20 parts by weight of isopropyl alcohol, and 74.05 parts by weight of water were mixed together to prepare an aqueous solution (pH: 5.5). Except this, a composite semipermeable membrane was obtained in the same manner as in Example 1. The composite semipermeable membrane produced was used to conduct permeation tests by the same method as in Example 1. As a result, the sodium chloride rejection was 99.1% and the permeation flux was 0.8 $m^3/(m^2/day)$. Furthermore, the IPA rejection was 77% and the permeation flux was 0.8 $m^3/(m^2/day)$. This composite semipermeable membrane showed a far lower permeation flux than that obtained in Example 1.

## REFERENCE EXAMPLE 2

A composite semipermeable membrane was obtained in the same manner as in Example 1, except that 6.3 parts by weight of sodium benzenesulfonate was added in place of the benzenesulfonic acid and the sodium hydroxide (the pH of the resultant aqueous solution was 7.0). The composite semipermeable membrane produced was used to conduct permeation tests by the same method as in Example 1. As a result, the sodium chloride rejection was 99.3% and the permeation flux was 0.8 $m^3/(m^2/day)$. Furthermore, the IPA rejection was 81% and the permeation flux was 0.8 $m^3/(m^2/day)$.

**TABLE**

| | Aqueous solution | | pH | Aqueous sodium chloride solution (raw water) | | Aqueous IPA solution (raw water) | |
|---|---|---|---|---|---|---|---|
| | Acid | Alkali metal | | Sodium chloride rejection (%) | Permeation flux ($m^3/m^2/day$) | IPA rejection (%) | Permeation flux ($m^3/m^2/day$) |
| Example 1 | Benzenesulfonic acid | Sodium hydroxide | 7.2 | 99.1 | 1.4 | 83 | 1.4 |
| Example 2 | Acetic acid | Sodium hydroxide | 6.6 | 99.2 | 1.3 | 84 | 1.3 |

(continued)

| | | Aqueous solution | | pH | Aqueous sodium chloride solution (raw water) | | Aqueous IPA solution (raw water) | |
|---|---|---|---|---|---|---|---|---|
| | | Acid | Alkali metal | | Sodium chloride rejection (%) | Permeation flux ($m^3/m^2$/day) | IPA rejection (%) | Permeation flux ($m^3/m^2$/day) |
| Example 3 | | Methanesulfonic acid | Sodium hydroxide | 6.1 | 99.2 | 1.5 | 80 | 1.5 |
| Example 4 | | Camphorsulfonic acid | Sodium hydroxide | 6.2 | 99.1 | 1.3 | 83 | 1.3 |
| Example 5 | | Benzenesulfonic acid | Potassium hydroxide | 6.3 | 99.1 | 1.1 | 79 | 1.1 |
| Example 6 | | Benzenesulfonic acid | Lithium hydroxide | 9.7 | 99.2 | 1.0 | 85 | 1.0 |
| Reference Example 1 | | Benzenesulfonic acid | Sodium hydroxide | 12 | 99.2 | 0.7 | 80 | 0.7 |
| Comparative Example 1 | | Benzenesulfonic acid | - | 3 | 27 | 3.8 | 10 | 3.9 |
| Comparative. Example 2 | | Benzenesulfonic acid | Triethylamine | - | 99.1 | 1.4 | 77 | 1.4 |
| Comparative Example 3 | | Hydrochloric acid | Sodium hydroxide | 5.5 | 99.1 | 0.8 | 77 | 0.8 |
| Reference Example 2 | | - | - | 7.0 | 99.3 | 0.8 | 81 | 0.8 |

**Claims**

1. A process for producing a composite semipermeable membrane which comprises forming on a surface of a porous supporting film, a thin film comprising a polyamide resin obtained by reacting a polyfunctional amine ingredient with a polyfunctional acid ingredient selected from polyfunctional acid halides and polyfunctional acid anhydrides each having two or more reactive carbonyl groups in the presence of at least an alkali metal hydroxide and an organic acid, wherein the thin film is formed by bringing an aqueous solution prepared by mixing at least the polyfunctional amine ingredient, the alkali metal hydroxide, the organic acid, and water into contact with an organic solution containing the polyfunctional acid ingredient to cause interfacial polymerization, wherein the ratio of the normality of the alkali metal hydroxide to that of the organic acid to be mixed therewith (alkali metal hydroxide/organic acid) is from 1.2/1 to 0.9/1, and wherein the aqueous solution has a pH of from 5 to 11.

2. The process of claim 1, wherein the thin film is heated to 100°C or higher.

3. The process of claim 1, wherein the organic acid contains at least one of a sulfo group and a carboxyl group.

4. The process of claim 1, wherein the organic acid is an organic acid which does not have a long-chain alkyl group having 6 or more carbon atoms.

**Patentansprüche**

1. Verfahren zum Herstellen einer semipermeablen Verbundmembran, umfassend das Ausbilden, auf der Oberfläche einer porösen Trägerschicht, einer dünnen Schicht, umfassend ein Polyamidharz, erhalten durch Umsetzen eines polyfunktionellen Aminbestandteils mit einem polyfunktionellen Säurebestandteil, ausgewählt aus polyfunktionellen Säurehalogeniden und polyfunktionellen Säureanhydriden, wobei jedes zwei oder mehr reaktive Carbonylgruppen besitzt, in der Gegenwart mindestens eines Alkalimetallhydroxids und einer organischen Säure, wobei die dünne Schicht ausgebildet wird durch das in Kontaktbringen einer wässrigen Lösung, die durch Mischen mindestens des polyfunktionellen Aminbestandteils, des Alkalimetallhydroxids, der organischen Säure und Wasser hergestellt wird, mit einer organischen Lösung, die den polyfunktionellen Säurebestandteil enthält, so dass eine Grenzflächenpolymerisation herbeigeführt wird, wobei das Verhältnis der Normalität des Alkalimetallhydroxids zu der der organischen Säure, die damit gemischt wird (Alkalimetallhydroxid/organische Säure) von 1,2/1 bis 0,9/1 ist, und wobei die wässrige Lösung einen pH von 5 bis 11 besitzt.

2. Verfahren nach Anspruch 1, wobei die dünne Schicht auf 100°C oder höher erwärmt wird.

3. Verfahren nach Anspruch 1, wobei die organische Säure mindestens eine von einer Sulfogruppe und einer Carboxylgruppe enthält.

4. Verfahren nach Anspruch 1, wobei die organische Säure eine organische Säure ist, die keine Langkettenalkylgruppe besitzt, die 6 oder mehr Kohlenstoffatome besitzt.

**Revendications**

1. Procédé de production d'une membrane semi-perméable composite, lequel comprend la formation, sur une surface d'un film de support poreux, d'un film mince comprenant une résine de polyamide obtenue par réaction d'un composant amine polyfonctionnel avec un composant acide polyfonctionnel sélectionné parmi des halogénures d'acides polyfonctionnels et des anhydrides d'acides polyfonctionnels ayant chacun deux groupes carbonyle réactifs ou plus en présence d'au moins un hydroxyde de métal alcalin et d'un acide organique, où le film mince est formé par mise en contact d'une solution aqueuse préparée par mélange d'au moins le composant amine polyfonctionnel, l'hydroxyde de métal alcalin, l'acide organique et l'eau, avec une solution organique contenant le composant acide polyfonctionnel pour déclencher une polymérisation interfaciale, où le rapport de la normalité de l'hydroxyde de métal alcalin à celle de l'acide organique à mélanger avec ce dernier (hydroxyde de métal alcalin/acide organique) est de 1,2/1 à 0,9/1 et où la solution aqueuse à un pH de 5 à 11.

2. Procédé selon la revendication 1, où le film mince est chauffé à 100°C ou plus.

3. Procédé selon la revendication 1, où l'acide organique contient au moins un groupe sulfo ou un groupe carboxyle.

4. Procédé selon la revendication 1, où l'acide organique est un acide organique qui n'a pas de groupe alkyle à chaîne longue ayant 6 atomes de carbone ou plus.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55147106 A
- JP 62121603 A
- JP 63218208 A
- JP 2001079372 A
- JP 6073617 B

- EP 1020218 A
- EP 1060785 A
- US 5674398 A
- US 5510527 A
- JP 8224452 A